# EUROPEAN PATENT SPECIFICATION

(11) **EP 2 538 300 B1**
(45) Date of publication and mention of the grant of the patent: **08.07.2015**
(21) Application number: 11780663.8
(22) Date of filing: 12.05.2011
(51) Int. Cl.: G05F 1/67, H02J 3/38

(54) **VOLTAGE CONVERSION DEVICE, VOLTAGE CONVERSION METHOD, SOLAR POWER GENERATION SYSTEM, AND MANAGEMENT DEVICE**
SPANNUNGSUMWANDLUNGSVORRICHTUNG, SPANNUNGSUMWANDLUNGSVERFAHREN, SYSTEM ZUR SOLARSTROMERZEUGUNG UND VERWALTUNGSVORRICHTUNG
DISPOSITIF DE CONVERSION DE TENSION, PROCÉDÉ DE CONVERSION DE TENSION, SYSTÈME DE GÉNÉRATION D'ÉNERGIE SOLAIRE ET DISPOSITIF DE GESTION

(30) Priority: 12.05.2010 JP 2010109907; 12.05.2010 JP 2010109906
(43) Date of publication of application: 26.12.2012
(73) Proprietor: Omron Corporation, Kyoto-shi, Kyoto 600-8530 (JP)
(72) Inventor: ISHII Takanori, Kyoto-shi Kyoto 600-8530 (JP); MISUMI Shuichi, Kyoto-shi Kyoto 600-8530 (JP); ENAMI Akira, Kyoto-shi Kyoto 600-8530 (JP); NAKAI Takuya, Kyoto-shi Kyoto 600-8530 (JP)
(74) Representative: Horn Kleimann Waitzhofer Patentanwälte PartG mbB
(86) International application number: PCT/JP2011/060916
(87) International publication number: WO 2011/142406

(56) References cited:
- EP-A1- 2 104 200
- WO-A1-2009/051853
- WO-A2-2009/140551
- JP-A- 2000 112 545
- JP-A- 2002 238 246
- JP-A- 2003 289 626
- JP-A- 2010 177 554
- US-A1- 2005 172 995
- US-A1- 2010 052 425
- US-B1- 7 602 080

## Description

### TECHNICAL FIELD

The present invention relates to a voltage converter, a voltage converting method, a photovoltaic system, and a management device, and particularly relates to a voltage converter, a voltage converting method, a photovoltaic system, and a management device which are made capable of obtaining a higher output.

### BACKGROUND ART

In recent years, from a viewpoint of the global environment such as reduction in emission of carbon dioxide, there has been promoted spreading of a photovoltaic system that generates power by means of a solar battery.

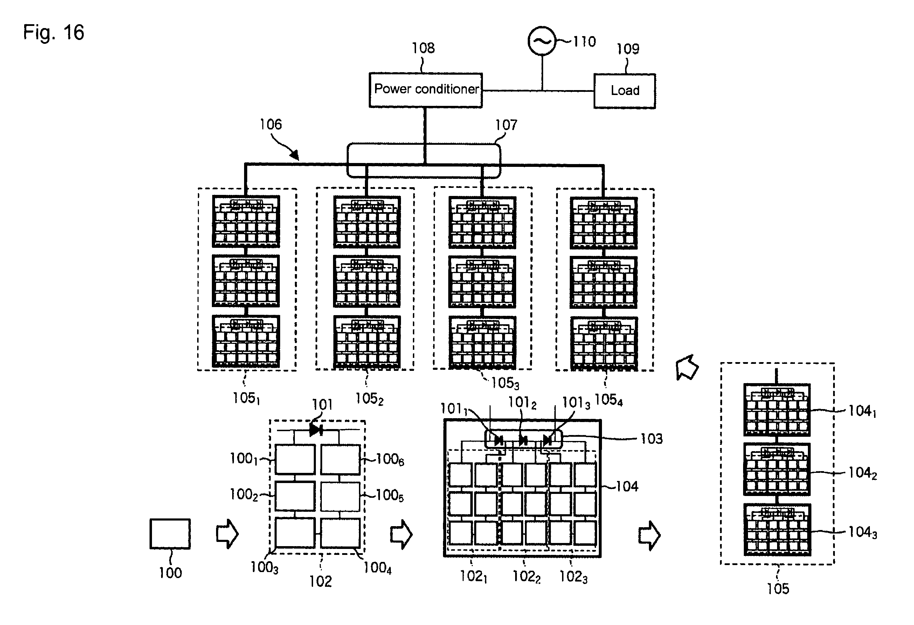

With reference to Fig. 16, a configuration of the photovoltaic system will be described.

On the lower left of Fig. 16, a solar battery cell 100 as a minimum unit of the configuration of a solar battery is shown, and the solar battery cell 100 generates power by a photoelectric effect due to reception of irradiation with sunlight.

Further, a plurality of solar battery cells 100 are connected in series, to constitute a solar battery cluster 102. In the example shown in Fig. 16, the solar battery cluster 102 includes six solar battery cells 100₁ to 100₆, and the solar battery cells 100₁ and 100₆ at both ends thereof are connected via a bypass diode 101.

A plurality of solar battery clusters 102 are connected in series, to constitute a solar battery module (panel) 104. In the example shown in Fig. 16, the solar battery module 104 includes three solar battery clusters 102₁ to 102₃, and bypass diodes 101₁ to 101₃ provided in the respective solar battery clusters 102₁ to 102₃ are accommodated in a terminal box 103.

Further, a plurality of solar battery modules 104 are connected in series, to constitute a solar battery string 105. In the example shown in Fig. 16, the solar battery string 105 includes three solar battery modules 104₁ to 104₃.

Further, a plurality of solar battery strings 105 are connected in parallel, to constitute a solar battery array 106. In the example shown in Fig. 16, the solar battery array 106 includes four solar battery strings 105₁ to 105₄. The solar battery strings 105₁ to 105₄ are connected in a connection box 107, and thereafter connected to a power conditioner 108.

The power conditioner 108 converts direct-current power outputted from the solar battery array 106 to alternating-current power and supplies it to a load 109 or returns it to a commercial power system 110 provided by a power company. Further, the power conditioner 108 has a function of performing such control as to obtain a maximum output from the solar battery array 106 based on maximum power point tracking (MPPT) control.

In the photovoltaic system as thus configured, it has been desired to more efficiently convert energy from sunlight to power, and a variety of techniques have been developed. For example, there has been disclosed a technique in which a DC/DC converter is provided in each solar battery array, and based on detection results of a voltage and a current of power that is outputted from the solar battery array, maximum power point tracking control is performed by the DC/DC converter while the output from the solar battery array is held in a direct-current state (refer to Patent Document 1).

There has further been developed a technique in which the maximum power point tracking control is performed in units of the solar battery string or the solar battery module.

US 2010/052425 A1 discloses a method for networked multi-inverter maximum power point tracking. A group of solar power stations with inverters are adjusted in order to achieve optimum power output in accordance with maximum power-point tracking (MPPT). The MPPT data is used to perform adjustments. Power measurement factors, including Maximum Power Points (MPPs) are established to represent a bus-voltage setting that produces the maximum power output from an individual photovoltaic panel.

US 7,602,080 B1 discloses systems and methods to balance currents among a plurality of photovoltaic units connected in series. A management unit is coupled between a photovoltaic energy production unit and a string of energy production units. The management unit has an energy storage element (e.g., a capacitor) connected to the photovoltaic energy production unit. The management unit further has a switch to selectively couple to the energy storage element and the photovoltaic energy production unit to the string. The management unit allows the current in the string to be larger than the current in the photovoltaic energy production unit.

WO 2009/140551 A2 discloses a method for selecting between centralized and distributed maximum power point tracking in an energy generating system. The energy generating system includes a plurality of energy generating devices, each of which is coupled to a corresponding local converter. Each local converter includes a local controller for the corresponding energy generating device. The method includes determining whether the energy generating devices are operating under quasi-ideal conditions. The energy generating system is placed in a centralized maximum power point tracking (CMPPT) mode when the energy generating devices are operating under quasi-ideal conditions and is placed in a distributed maximum power point tracking (DMPPT) mode when the energy generating devices are not operating under quasi-ideal conditions.

### PRIOR ART DOCUMENT

### PATENT DOCUMENT

Patent Document 1: Japanese Unexamined Patent Publication No. 2000-112545

### SUMMARY OF THE INVENTION

### PROBLEMS TO BE SOLVED BY THE INVENTION

Incidentally, for example in such a photovoltaic system as to provide the DC/DC converter with respect to each solar battery module and perform the maximum power point tracking control, a voltage and a current of power that is outputted from each solar battery module fluctuate. In the foregoing photovoltaic system, by simply combining conventional power conditioners, the power conditioners are also controlled so as to obtain maximum power, thus causing oscillation (wobbling) of the voltage and the current of the power in the photovoltaic system as a whole, and an amount of power generation is not necessarily reliably improved. Accordingly, in the photovoltaic system provided with the DC/DC converter with respect to each solar battery module, it is necessary to perform optimum control so as to stabilize an output characteristic of the DC/DC converter and obtain a higher output.

The present invention was made in light of such circumstances, and serves to obtain a higher output.

### MEANS FOR SOLVING THE PROBLEM

A voltage converter of the present invention includes: a conversion processing unit configured to execute a process to convert a voltage of power generated from sunlight; and a switching unit configured to switch an operation of the conversion processing unit to either conversion-rate fixing or maximum power point tracking control at least based on an operation status of the conversion processing unit.

A voltage converting method of the present invention includes the steps of: executing a conversion process for executing a process to convert a voltage of power generated from sunlight; and switching an operation of the conversion process to either conversion-rate fixing or maximum power point tracking control at least based on an operation status of the conversion process.

In such a configuration, the operation of the conversion process is switched to either conversion-rate fixing or maximum power point tracking control based on the operation status of the conversion process for executing a process to convert a voltage of power generated from sunlight, and hence it is possible to generate power with a higher output.

Moreover, the voltage converter of the present invention can further include: an operation status acquiring unit configured to communicate with another voltage converter to acquire an operation status of conversion processing unit included in the another voltage converter; and a comparison unit configured to compare an amount of output power which is the operation status acquired by the operation status acquiring unit with an amount of output power which is the operation status of the conversion processing unit to decide whether or not to fix a conversion rate of the voltage in the conversion processing unit, and notifying the switching unit of the determination.

In such a configuration, communication is made with another voltage converter, to acquire an operation status of the conversion processing unit included in the voltage converter; and the amount of output power as the acquired operation status is compared with the amount of output power as the operation status of the conversion processing unit, to determine whether or not to fix a conversion rate of the voltage in the voltage converter, whereby it is possible to fix a conversion rate of the conversion processing means whose output is maximum, so as to obtain a higher output.

A power adjuster not being part of the present invention includes: a conversion unit configured to convert direct-current power, outputted from each of a plurality of solar battery modules under such control as to acquire a maximum power, to alternating-current power; and a voltage control unit configured to perform control such that the direct-current power that is inputted into the conversion unit has a predetermined given voltage.

A power adjusting method not being part of the present invention includes the steps of: converting direct-current power, outputted from each of a plurality of solar battery modules under such control as to acquire a maximum power, to alternating-current power; and performing control such that the direct-current power has a predetermined given voltage.

In such a configuration, at the time of converting direct-current power, outputted from each of the plurality of solar battery modules under such control as to acquire the maximum power, to alternating-current power, control is performed such that the inputted direct-current power has a predetermined given voltage, thereby stabilizing power generation, and hence it is possible to perform power generation with a high output.

Moreover, the power adjuster can further include: a direct-current voltage converting unit configured to convert a voltage of generated power for each of the plurality of solar battery modules; and a voltage deciding unit configured to decide the predetermined given voltage based on a conversion loss in the direct-current voltage converting unit and a conversion loss in the conversion unit.

In such a configuration, the predetermined given voltage is decided based on the conversion loss at the time of converting the voltage in the plurality of solar battery modules and based on the conversion loss at the time of converting direct-current power to alternating-current power, and hence it is possible to further increase the amount of power generation.

Moreover, a photovoltaic system of the present invention includes a voltage converter for converting a voltage of power generated from sunlight being provided with respect to each solar battery module, and the voltage converter has a conversion processing unit configured to execute a process to convert the voltage, and a switching unit configured to switch an operation of the conversion processing unit to either conversion-rate fixing or maximum power point tracking control at least based on an operation status of the conversion processing unit.

In such a configuration, the voltage converter for converting the voltage of power generated from sunlight is provided with respect to each solar battery module, and an operation of the conversion process is switched to either conversion-rate fixing or maximum power point tracking control based on an operation status of the conversion process for executing a process to convert a voltage, whereby it is possible to generate power with a higher output.

A photovoltaic system of the present invention includes: a plurality of solar battery modules; a direct-current voltage converting unit which is provided with respect to each of the plurality of solar battery modules and converts a voltage of generated power; a conversion unit configured to convert direct-current power, outputted from each of the plurality of solar battery modules under such control as to acquire a maximum power, to alternating-current power; and a voltage control unit configured to perform control such that the direct-current power that is inputted into the conversion unit has a predetermined given voltage.

In such a configuration, at the time of converting direct-current power, outputted from each of the solar battery modules under such control as to acquire the maximum power, to alternating-current power, control is performed such that the inputted direct-current power has a predetermined given voltage, thereby stabilizing power generation, and hence it is possible to perform power generation with a high output.

Moreover, a management device of the present invention includes: an operation status acquiring unit configured to communicate with a plurality of voltage converters each having a conversion processing unit configured to execute a process to convert a voltage of power generated from sunlight and a switching unit configured to switch an operation of the conversion processing unit to either conversion-rate fixing or maximum power point tracking control at least based on an operation status of the conversion processing unit, to acquire operation statuses of the conversion processing unit included in all of the voltage converters; and a deciding unit configured to compare amounts of output power which are the operation statuses acquired by the operation status acquiring unit, to decide the voltage converter to be fixed with a voltage conversion rate in the conversion processing unit.

In such a configuration, communication is made with the plurality of voltage converters to acquire operation statuses of the conversion processing units included in all the voltage converters, and amounts of output power as the acquired operation statuses are compared, to decide the voltage converter to be fixed with the voltage conversion rate in the conversion processing means, whereby it is possible to obtain a higher output.

A photovoltaic system of the present invention includes: a plurality of solar battery modules; a direct-current voltage converting unit which is provided with respect to each of the plurality of solar battery modules and converts a voltage of generated power; a conversion unit configured to convert direct-current power, outputted from each of the plurality of solar battery modules under such control as to acquire a maximum power, to alternating-current power; and a voltage control unit configured to perform control such that the direct-current power that is inputted into the conversion unit has a predetermined given voltage.

In such a configuration, at the time of converting direct-current power, outputted from each of the solar battery modules under such control as to acquire the maximum power, to alternating-current power, control is performed such that the inputted direct-current power has a predetermined given voltage, thereby stabilizing power generation, and hence it is possible to perform power generation with a high output.

### EFFECT OF THE INVENTION

According to the voltage converter, the voltage converting method, the photovoltaic system, and the management device of the present invention, it is possible to obtain a higher output.

### BRIEF DESCRIPTION OF THE DRAWINGS

Fig. 1 is a block diagram showing an example of a configuration of one embodiment of a photovoltaic system, to which the present invention has been applied.
Fig. 2 is a block diagram showing an example of a configuration of an output converter.
Fig. 3 is a block diagram showing an example of a configuration of a control part.
Fig. 4 is a flowchart illustrating a process for switching an operation of a DC/DC converting part.
Fig. 5 is a block diagram showing another constitutional example of the control part.
Fig. 6 is a flowchart illustrating a process in the control part.
Fig. 7 is a block diagram showing an example of a configuration of a power conditioner.
Fig. 8 is a flowchart illustrating a process for holding a voltage, accepted by a power conditioner, constant.
Fig. 9 is a block diagram showing an example of a configuration of another embodiment of the photovoltaic system, to which the present invention has been applied.
Fig. 10 is a block diagram showing an example of a configuration of a management unit.
Fig. 11 is a flowchart illustrating a process for designating a change in operation to the output converter.
Fig. 12 is a block diagram showing another constitutional example of the management unit.
Fig. 13 is a diagram showing a table where a duty value is associated with conversion efficiency.
Fig. 14 is a diagram showing a table where a voltage value of an input voltage is associated with conversion efficiency.
Fig. 15 is a flowchart illustrating a process for setting a reference voltage value in a power conditioner.
Fig. 16 is a view illustrating a configuration of a photovoltaic system.

### BEST MODE FOR CARRYING OUT THE INVENTION

Hereinafter, a specific embodiment, to which the present invention has applied, will be described in detail with reference to the drawings.

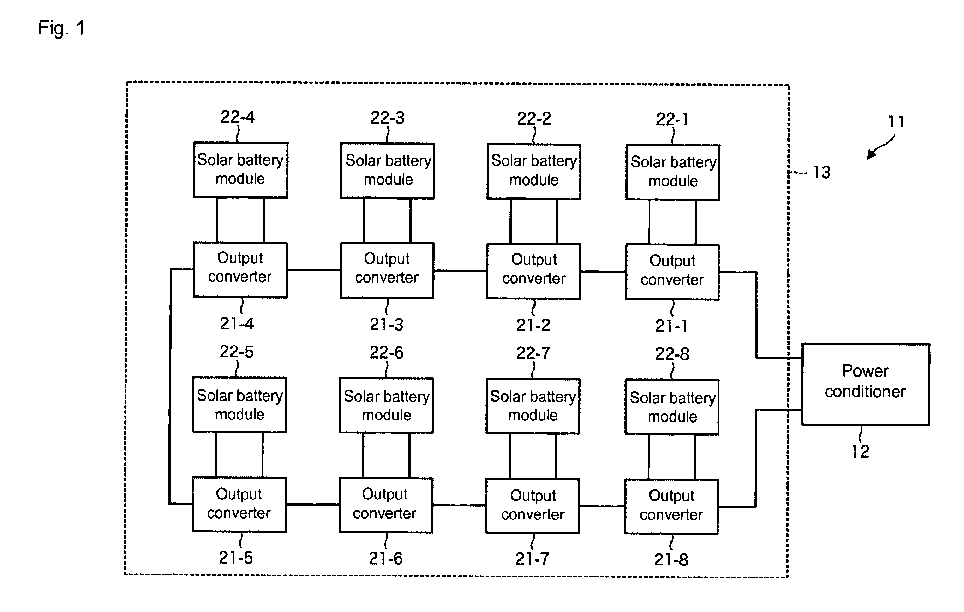

Fig. 1 is a block diagram showing an example of a configuration of one embodiment of a photovoltaic system, to which the present invention has applied. It is to be noted that in the present specification, the system is one that represents the whole apparatus including a plurality of devices.

In Fig. 1, a photovoltaic system 11 is configured by connection of a power conditioner 12 with a solar battery string 13, and power generated in the solar battery string 13 and converted to an alternating-current one in the power conditioner 12 is supplied to a load and a power system (see Fig. 16). It is to be noted that, although the photovoltaic system 11 of Fig. 1 is configured such that one solar battery string 13 is connected to the power conditioner 12, a plurality of solar battery strings are connected in parallel to the power conditioner 12 as described with reference to Fig. 16, and illustration of those are omitted.

The power conditioner 12 is a power adjuster that adjusts power outputted from the solar battery string 13 such that the power can be supplied to a load, not shown, and outputs the power.

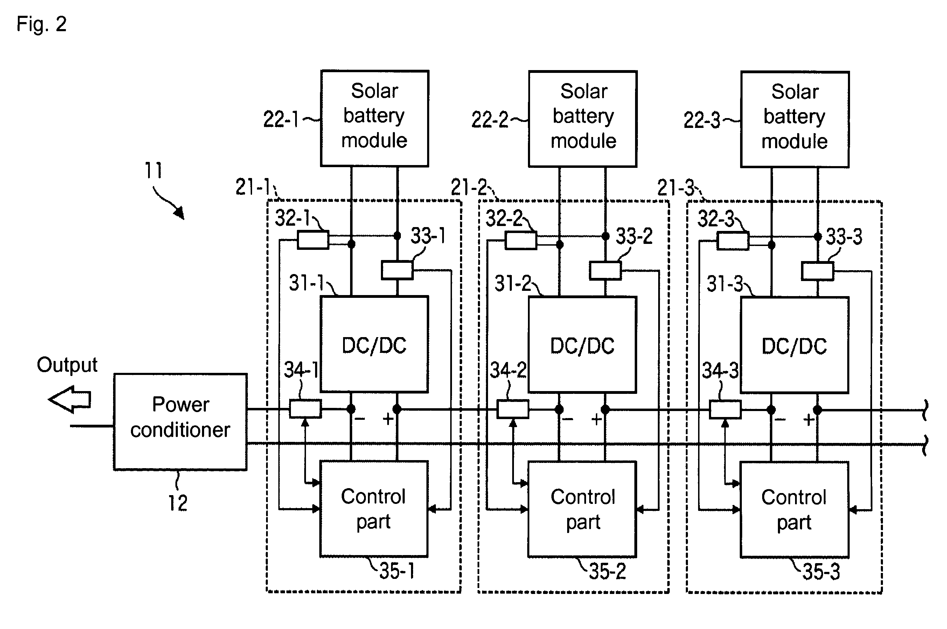

In the solar battery string 13, eight output converters 21-1 to 21-8 are connected in series, and solar battery modules 22-1 to 22-8 are respectively connected to the output converters 21-1 to 21-8. Further, the output converter 21-1 and the output converter 21-8 connected in series and located at both ends are connected to the power conditioner 12. It is to be noted that the output converters 21-1 to 21-8 are each configured in a similar manner, and will hereinafter be referred to as an output converter 21 as appropriate when there is no need for distinguishing among the output converters 21-1 to 21-8, and this also applies to internal configurations of the output converters 21-1 to 21-8 as described later with reference to Fig. 2. Further, the solar battery modules 22-1 to 22-8 will similarly be referred to as a solar battery module 22.

In such a manner, the photovoltaic system 11 is configured such that the output converter 21 is provided with respect to each solar battery module 22. Direct-current power, outputted from the solar battery module 22 in accordance with irradiation with sunlight, is converted to direct-current power with a predetermined voltage by the output converter 21 as the voltage converter, and is then supplied to the power conditioner 12.

The configuration of the output converter 21 will be described with reference to Fig. 2. Fig. 2 shows part of the solar battery string 13 (output converters 21-1 to 21-3, solar battery modules 22-1 to 22-3).

As shown in Fig. 2, the output converter 21 includes a DC/DC converting part 31, a voltage detecting part 32, a current detecting part 33, a power line communication part 34, and a control part 35.

The solar battery module 22 is connected to an input-side terminal of the DC/DC converting part 31 (conversion processing means, direct-current voltage converting means), direct-current power generated by the solar battery module 22 is supplied to the DC/DC converting part 31, and the DC/DC converting part 31 converts a voltage of the power outputted from the solar battery module 22 to a voltage with a conversion rate in accordance with control of the control part 35. Further, a power line directly or indirectly connected to the power conditioner 12 is connected to an output-side terminal of the DC/DC converting part 31, and the DC/DC converting part 31 outputs power of the voltage after conversion to the power line.

The voltage detecting part 32 detects a voltage of the power supplied from the solar battery module 22 to the DC/DC converting part 31, namely a voltage between two wires connecting the solar battery module 22 and the DC/DC converting part 31, and supplies a signal indicating the voltage value to the control part 35.

The current detecting part 33 detects a current of the power supplied from the solar battery module 22 to the DC/DC converting part 31, and a signal indicating the current value is supplied to the control part 35.

For example, the current detecting part 33 can measure a voltage at each end of a resistor (not shown) arranged on a wire connecting the solar battery module 22 and the DC/DC converting part 31, thereby to obtain a current.

The power line communication part 34 is a communication part for communicating with the control part 35 of another output converter 21 via the power line for use in supplying power to the power conditioner 12. It is to be noted that, although communication is performed by means of power-line communication in the present embodiment, communication may be performed by means other than the power-line communication.

Signals indicating a voltage value and a current value of power that is supplied to the DC/DC converting part 31 are supplied respectively from the voltage detecting part 32 and the current detecting part 33 to the control part 35. Further, the control part 35 is connected with an output-side power line of the DC/DC converting part 31, and the control part 35 measures the voltage and the current of the power that is outputted from the DC/DC converting part 31. Based on the voltage and the current of the power that is inputted into the DC/DC converting part 31 and the voltage and the current of the power that is outputted from the DC/DC converting part 31, the control part 35 searches a duty value with which an output of the DC/DC converting part 31 is maximum, to perform control (maximum operating point control) on the DC/DC converting part 31 so as to be operated with that duty value. That is, the control part 35 is a maximum power control means. Further, the control part 35 communicates with the control part 35 of another output converter 21 via the power line communication part 34 according to the need.

The output converter 21 is configured as thus described, and in each of the output converters 21-1 to 21-8 (see Fig. 1), control is performed so as to obtain a maximum output. For this reason, power with a different voltage is outputted from each of the output converters 21-1 to 21-8, and the power conditioner 12 is supplied with power with a voltage value obtained by adding those voltages.

In such a configuration where the maximum operating point control is performed in each of the output converters 21-1 to 21-8, when the maximum operating point control is also performed in the power conditioner 12, power oscillates in the photovoltaic system as a whole, which destabilizes power generation.

Thereat, in the photovoltaic system 11, the control parts 35 of the output converters 21-1 to 21-8 are each communicated with one another, and in the output converter 21 whose amount of output power (amount of power generation) is maximum, a process for fixing a conversion rate of the DC/DC converting part 31 to a given rate (or setting a duty value to 100) is performed in each of the solar battery strings 13. Thereby, an output characteristic of the output converter 21 with the conversion rate of the DC/DC converting part 31 held fixed becomes a reference for making output characteristics of another output converters 21 converge, thereby stabilizing the operations of the output converters 21-1 to 21-8 and the power conditioner 12.

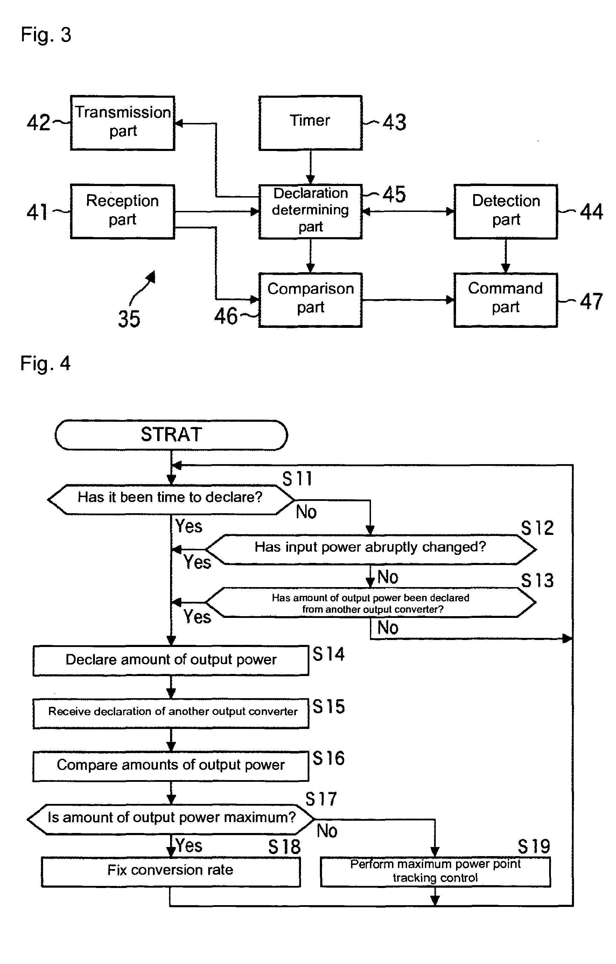

Fig. 3 is a block diagram showing an example of a configuration of the control part 35 where mutual communication is performed to allow switching of operation of the DC/DC converting part 31.

In Fig. 3, the control part 35 is configured to include a reception part 41, a transmission part 42, a timer 43, a detection part 44, a declaration determining part 45, a comparison part 46, and a command part 47.

The reception part 41 receives a signal transmitted from the control part 35 of another output converter 21 via the power line communication part 34 (Fig. 2). For example, when the control part 35 of another output converter 21 transmits a signal declaring an amount of output power of the output converter 21, the reception part 41 receives the signal, supplies it to the comparison part 46, and notifies the declaration determining part 45 of the declaration. That is, the reception part 41 is operation status acquiring means for acquiring an amount of output power which is transmitted from the control part 35 of another output converter 21 and represents one of operation statuses of the DC/DC converting part 31 included in the another output converter 21.

The transmission part 42 transmits a signal to the control part 35 of another output converter 21 via the power line communication part 34. For example, when supplied with an amount of output power of the own output converter 21 from the declaration determining part 45, the transmission part 42 transmits a signal indicating information including the amount of output power and an identification number of the own output converter 21, to declare the amount of output power.

The timer 43 performs timekeeping, and when it is time to declare the amount of output power, the timer 43 notifies the declaration determining part 45 that it has been such time. For example, in the photovoltaic system 11, the time for declaring the amount of output power among the output converters 21-1 to 21-8 has been set to every ten seconds, every one minute, or the like.

The detection part 44 acquires a voltage value and a current value of power that is inputted into the DC/DC converting part 31 via the voltage detecting part 32 and the current detecting part 33 of Fig. 2, and also acquires a voltage value and a current value of power that is outputted from the DC/DC converting part 31 via the power line connected to the output side of the DC/DC converting part 31. Then, the detection part 44 supplies the command part 47 with the voltage value and the current value of the power that is inputted into the DC/DC converting part 31 and the voltage value and the current value of the power that is outputted from the DC/DC converting part 31.

Further, when the power that is inputted into the DC/DC converting part 31 abruptly changes (abruptly rises and abruptly falls), the detection part 44 notifies the declaration determining part 45 of the abrupt change in power that is inputted into the DC/DC converting part 31. Moreover, the detection part 44 notifies the declaration determining part 45 of the amount of output power of the DC/DC converting part 31 in accordance with a request from the declaration determining part 45.

The declaration determining part 45 determines whether or not to declare the amount of output power of the output converter 21. For example, the declaration determining part 45 determines to declare the amount of output power when notified from the timer 43 that it has been time to declare the amount of output power.

Further, the declaration determining part 45 also determines to declare the amount of output power when notified from the reception part 41 that the amount of output power has been declared from another output converter 21, or when notified from the detection part 44 that the power that is inputted into the DC/DC converting part 31 has abruptly changed.

Then, when determining to declare the amount of output power, the declaration determining part 45 acquires the amount of output power of the DC/DC converting part 31 via the detection part 44, supplies it to the transmission part 42, and transmits a signal to declare the amount of output power of the DC/DC converting part 31 to the control part 35 of another output converter 21. Further, the declaration determining part 45 supplies the acquired amount of output power of the DC/DC converting part 31 to the comparison part 46.

The amount of output power of the DC/DC converting part 31 of the output converter 21, transmitted from the control part 35 of another output converter 21, is supplied to the comparison part 46 from the reception part 41. The comparison part 46 is comparison means for comparing the amount of output power of the own DC/DC converting part 31 which is supplied from the declaration determining part 45 with the amount of output power of the DC/DC converting part 31 of another output converter 21 which is supplied from the reception part 41. When the amount of output power of the own DC/DC converting part 31 is maximum as a result of the comparison, the comparison part 46 notifies the command part 47 that a conversion rate in the own DC/DC converting part 31 will be fixed, and switches the operation. It is to be noted that, when the conversion rate of the DC/DC converting part 31 has already been fixed, the comparison part 46 does not output that command, and the operation with the conversion rate of the DC/DC converting part 31 held fixed is continued.

On the other hand, when the amount of output power of the own DC/DC converting part 31 is not maximum as the result of the comparison, namely, when the DC/DC converting part 31 of another output converter 21 has an amount of output power larger than that of the own DC/DC converting part 31, the comparison part 46 notifies the command part 47 that the maximum power point tracking control will be performed in the own DC/DC converting part 31, and switches the operation. It is to be noted that, when the maximum power point tracking control has already been performed in the DC/DC converting part 31, the comparison part 46 does not output that command, and the maximum power point tracking control is continued in the DC/DC converting part 31.

The command part 47 outputs a command for designating an appropriate conversion rate for the DC/DC converting part 31 to perform an output in accordance with the maximum power point tracking control, or outputs a command for fixing the conversion rate of the DC/DC converting part 31. That is, the command part 47 is switching means for switching the operation of the DC/DC converting part 31 to either the conversion-rate fixing or the maximum power point tracking control in accordance with the notification from the comparison part 46.

For example, in the case of performing the maximum power point tracking control in the DC/DC converting part 31, the command part 47 outputs a command for fixing the conversion rate of the DC/DC converting part 31 when it is notified from the comparison part 46 that the conversion rate will be fixed. On the other hand, in the case of the conversion rate being fixed in the DC/DC converting part 31, when it is notified from the comparison part 46 that the maximum power point tracking control will be performed, the command part 47 starts outputting to the DC/DC converting part 31 a command for designating an appropriate conversion rate for performing an output in accordance with the maximum power point tracking control based on a voltage value and a current value detected by the detection part 44.

Fig. 4 is a flowchart illustrating a process of the control part 35 for switching an operation of the DC/DC converting part 31.

For example, when an amount of power generation, not smaller than an amount of power required for conversion by the DC/DC converting part 31, is outputted from the solar battery module 22 in accordance with irradiation with sunlight, the process is started, and in Step S11, the declaration determining part 45 determines whether or not it has been time to declare the amount of output power of the DC/DC converting part 31 in accordance with the timer 43. For example, the timer 43 counts the time from previous declaration, and when the time to declare the amount of output power elapses, the timer 43 notifies the declaration determining part 45 of such.

When it is determined in Step S11 that it has not been time to declare the amount of output power of the DC/DC converting part 31, the process goes to Step S12, and the declaration determining part 45 determines whether or not power that is inputted into the DC/DC converting part 31 has abruptly changed. For example, when notified from the detection part 44 that the power that is inputted into the DC/DC converting part 31 has abruptly changed, the declaration determining part 45 determines that the power that is inputted into the DC/DC converting part 31 has abruptly changed.

When it is determined in Step S12 that the power that is inputted into the DC/DC converting part 31 has not abruptly changed, the process goes to Step S13, and the declaration determining part 45 determines whether or not an amount of output power has been declared from another output converter 21. For example, in a case where the power that is inputted into the DC/DC converting part 31 has abruptly changed in another output converter 21, the amount of output power is declared from that output converter 21, and when the reception part 41 notifies the declaration determining part 45 of the declaration, the declaration determining part 45 determines that the amount of output power has been declared from another output converter 21.

In Step S13, when the declaration determining part 45 determines that the amount of output power has not been declared from another output converter 21, the process returns to Step S11, and thereafter, the same process is repeated. On the other hand, the process goes to Step S14 when it is determined in Step S11 that it has been time to declare the amount of output power of the DC/DC converting part 31, or when it is determined in Step S12 that the power that is inputted into the DC/DC converting part 31 has abruptly changed, or when it is determined in Step S13 that the amount of output power has been declared from another output converter 21.

In Step S14, the declaration determining part 45 acquires the voltage value and the current value of the power that is outputted from the DC/DC converting part 31 via the detection part 44, to obtain the amount of output power of the DC/DC converting part 31, and notifies the comparison part 46 of the amount of output power. Further, the declaration determining part 45 supplies the obtained amount of output power to the transmission part 42, and the transmission part 42 transmits a signal indicating information that includes the amount of output power and an identification number of the own output converter 21 to all of the other output converters 21 constituting the solar battery string 13, to notify them of the amount of output power.

In Step S15, the reception part 41 acquires information declaring the amount of output power, which is transmitted from the control part 35 of another output converter 21, and supplies the amount of output power of the DC/DC converting part 31 of another output converter 21 to the comparison part 46, and the process goes to Step S16.

In Step S16, the comparison part 46 compares the amount of output power of the DC/DC converting part 31 of another output converter 21 which was supplied in Step S15 with the amount of output power of the own DC/DC converting part 31 which was obtained by the declaration determining part 45 in Step S14.

After the process of Step S16, the process goes to Step S17, and as a result of the comparison in Step S16, the comparison part 46 determines whether or not the amount of output power of the own DC/DC converting part 31 is maximum.

When it is determined in Step S17 that the amount of output power of the own DC/DC converting part 31 is maximum, the process goes to Step S18, and the comparison part 46 notifies the command part 47 that the conversion rate in the DC/DC converting part 31 will be fixed. Accordingly, the command part 47 outputs to the DC/DC converting part 31 a command for fixing the conversion rate.

On the other hand, when it is determined in Step S17 that the amount of output power of the own DC/DC converting part 31 is not maximum, the process goes to Step S19, and the comparison part 46 notifies the command part 47 that the maximum power point tracking control will be performed. Accordingly, the command part 47 outputs a command for designating an appropriate conversion rate for performing an output in accordance with the maximum power point tracking control.

After the processes of Steps S18 and S19, the process returns to Step S11, and thereafter, the same process is repeated. It is to be noted that, for example, when an amount of irradiation of the solar battery module 22 with sunlight decreases and becomes not higher than an amount of power convertible by the DC/DC converting part 31, the process is completed.

As thus described, since the conversion rate is fixed in the output converter 21 where the amount of output power of the DC/DC converting part 31 is maximum, an output characteristic of that output converter 21 becomes a convergence reference, thus stabilizing as a whole a voltage and a current of outputted power in the output converters 21-1 to 21-8. This allows an increase in amount of power generation in the photovoltaic system 11 as a whole. That is, the photovoltaic system 11 can generate power with a higher output.

It is to be noted that, although the conversion rate is fixed only in the output converter 21 where the amount of output power of the DC/DC converting part 31 is maximum in the flowchart of Fig. 4, the conversion rate may be fixed not only in the one output converter 21 but in a plurality of output converters 21 having similar output characteristics. For example, there may be fixed conversion rates of a high-level group of output converters 21 each of whose DC/DC converting parts 31 have a large amount of output power, namely a predetermined number (e.g., three) of output converters 21 whose DC/DC converting parts 31 have largest amounts of output power, or there may be fixed conversion rates of the output converters 21 each of whose DC/DC converting parts 31 have an amount of output power within several percent from the maximum value. By fixing the conversion rate in a plurality of output converters 21 with similar output characteristics as thus described, it is possible to further stabilize the output converters 21-1 to 21-8 as a whole, and also reduce the time taken until the stabilization.

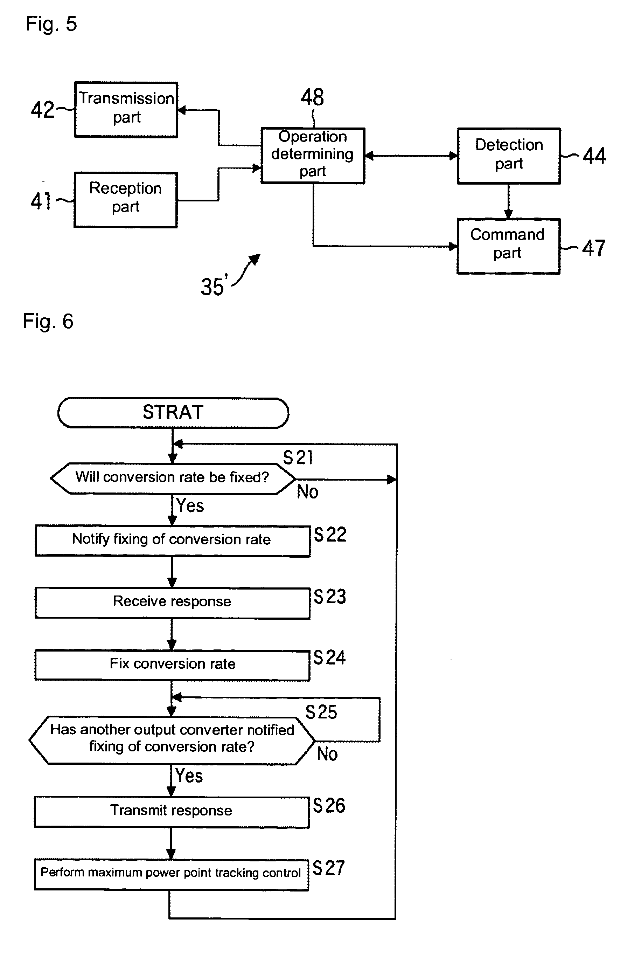

For example, FIG. 5 is a block diagram showing another constitutional example of the control part where mutual communication is performed to allow switching of operation of the DC/DC converting part 31.

In Fig. 5, a control part 35' is configured to include the reception part 41, the transmission part 42, the detection part 44, the command part 47 and an operation determining part 48. The control part 35' is common with the control part 35 of Fig. 3 in including the reception part 41, the transmission part 42, the detection part 44, and the command part 47, and specific descriptions thereof will be omitted.

The operation determining part 48 constantly calculates a duty value of the DC/DC converting part 31 based on a voltage value and a current value of power that is outputted from the DC/DC converting part 31 which are supplied from the detection part 44, and a maximum amount of output power of the solar battery module 22 which was set at the time of designing, and the operation determining part 48 performs a process to fix the conversion rate of the DC/DC converting part 31 when the duty value is not smaller than a reference value (e.g., 90) for a period of time not shorter than a given reference time. At this time, the operation determining part 48 notifies another output converter 21 via the transmission part 42 that the conversion rate will be fixed, and when the reception part 41 receives a response indicating reception of that notification, the operation determining part 48 notifies the command part 47 that the conversion rate in the DC/DC converting part 31 will be fixed. That is, the operation determining part 48 is determination means for determining whether or not to fix the conversion rate of the DC/DC converting part 31 based on the duty value of the DC/DC converting part 31 and the given reference time, and the transmission part 42 is notification means for notifying another output converter 21 of such. Further, the period when the duty value of the DC/DC converting part 31 is not smaller than the reference value is one of operation statuses of the DC/DC converting part 31 in the output converter 21.

Further, when the reception part 41 receives a notification that the conversion rate will be fixed from the control part 35 of another output converter 21 at the time of the conversion rate of the own DC/DC converting part 31 being fixed, the operation determining part 48 makes a response transmitted which indicates reception of that notification, and also notifies the command part 47 that the maximum power point tracking control will be performed in the own DC/DC converting part 31.

Fig. 6 is a flowchart illustrating a process in the control part 35'.

For example, when the solar battery module 22 outputs power in amount not smaller than a predetermined minimum amount of power generation in accordance with irradiation with sunlight, the process is started, and in Step S21, the operation determining part 48 determines whether or not to fix the conversion rate of the own DC/DC converting part 31. For example, the operation determining part 48 determines to fix the conversion rate of the own DC/DC converting part 31 when a period of the duty value of the DC/DC converting part 31 being not smaller than the reference value (e.g., 90) is not shorter than the given reference time.

In Step S21, the process is held until the operation determining part 48 determines to fix the conversion rate of the own DC/DC converting part 31, and the process goes to Step S22 when the operation determining part 48 determines to fix the conversion rate of the own DC/DC converting part 31.

In Step S22, the operation determining part 48 notifies the transmission part 42 that the conversion rate will be fixed, and the transmission part 42 transmits a notification that the conversion rate will be fixed, including an identification number of the own output converter 21, to all of the other output converters 21 constituting the solar battery string 13.

After the process of Step S22, the process goes to Step S23, and the reception part 41 receives a response, transmitted in response to the notification transmitted in Step S22, and supplies it to the operation determining part 48. Then, when the responses from all of the other output converters 21 are supplied to the operation determining part 48, the process goes to Step S24.

In Step S24, the operation determining part 48 notifies the command part 47 that the conversion rate in the DC/DC converting part 31 will be fixed. Accordingly, the command part 47 outputs to the DC/DC converting part 31 a command for fixing the conversion rate, and the process goes to Step S25.

In Step S25, the operation determining part 48 transmits a notification that the control part 35 of another output converter 21 will fix the conversion rate, to determine whether or not the reception part 41 has received the notification, and holds the process until determining that the reception part 41 has received the notification.

In Step S25, when it is determined that the reception part 41 has received the notification, the process goes to Step S26, and the operation determining part 48 transmits a response to that notification via the transmission part 42, and the process goes to Step S27.

In Step S27, the operation determining part 48 notifies the command part 47 that the maximum power point tracking control will be performed. Accordingly, the command part 47 starts outputting a command for designating an appropriate conversion rate for performing an output in accordance with the maximum power point tracking control, and the process returns to Step S21, whereafter the same process is repeated.

By such a process as thus described, the conversion rate is fixed in the output converter 21 where the amount of output power of the DC/DC converting part 31 is maximum, and an output characteristic of the output converter 21 is taken as a convergence reference, thereby stabilizing a voltage and a current of outputted power in the output converters 21-1 to 21-8 as a whole, and it is thus possible to increase the amount of power generation.

Further, after reception of the responses transmitted from all of the other output converters 21, the process is performed so as to fix the conversion rate in the DC/DC converting part 31, whereby it is possible to confirm that communication has been reliably performed, so as to perform a more stable process.

It is to be noted that the processes for fixing the conversion rates are performed substantially simultaneously in a plurality of DC/DC converting parts 31, and when those operations coincide, fixing and fluctuation of the conversion rate are repeated. Hence, for example, even when it is notified from another output converter 21 that the conversion rate will be fixed, the conversion rate of the own DC/DC converting part 31 is held fixed within a given time (e.g., the order of several seconds) from fixing of the conversion rate of the DC/DC converting part 31, whereby it is possible to avoid such repetition as above.

Further, other than determining whether or not to fix the conversion rate based on the duty value of the DC/DC converting part 31, for example, the operation determining part 48 may perform determination based on a voltage ratio or a current ratio of the input/output of the DC/DC converting part 31 or may perform determination based on whether or not a conversion loss in the DC/DC converting part 31 is not smaller than a given value. Moreover, fixing of the conversion rate, for example, includes setting the duty value to a given value not smaller than 90.

Incidentally, in the photovoltaic system 11, the power conditioner 12 can be configured so as to receive power at a voltage value (hereinafter referred to as reference voltage value as appropriate) previously set as a reference in order to avoid destabilization of power generation. Thereby, the voltage value obtained by adding voltages of power outputted from the respective output converters 21-1 to 21-8 constituting the solar battery string 13 converge to the reference voltage value set in the power conditioner 12.

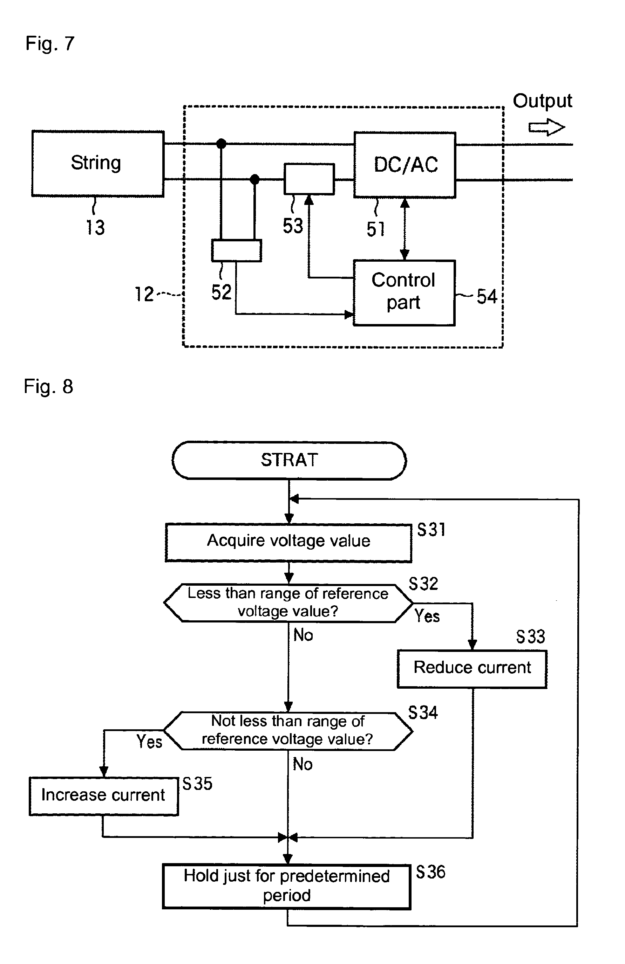

An example of a configuration of the power conditioner 12 will be described with reference to Fig. 7.

In Fig. 7, the power conditioner 12 is configured to include a DC/AC converter 51, a voltage detecting part 52, a current adjusting part 53 and a control part 54.

In accordance with control of the control part 54, the DC/AC converter 51 is conversion means for converting direct-current power, which is supplied from the solar battery string 13 to the power conditioner 12, to alternating-current power and outputting the power. The voltage detecting part 52 detects a voltage of the power supplied to the power conditioner 12, and supplies the control part 54 with a signal indicating that voltage value. In accordance with control of the control part 54, the current adjusting part 53 adjusts a current passing through the current adjusting part 53 such that the power that is inputted into the DC/AC converter 51 becomes a reference voltage value.

The control part 54 is voltage control means for making the current adjusting part 53 adjust a current such that the power that is inputted into the DC/AC converter 51 maintains the reference voltage value, in accordance with a voltage value detected by the voltage detecting part 52. For example, when the voltage value detected by the voltage detecting part 52 falls below the reference voltage value, the control part 54 controls the current adjusting part 53 to reduce the current and increase the voltage of the power that is inputted into the DC/AC converter 51 to the reference voltage value. On the other hand, when the voltage value detected by the voltage detecting part 52 exceeds the reference voltage value, the control part 54 controls the current adjusting part 53 to increase the current and decrease the voltage of the power that is inputted into the DC/AC converter 51 to the reference voltage value.

It is to be noted that this reference voltage value is, for example, set in the control part 54 in accordance with characteristics of the solar battery module 22 at the time of designing the photovoltaic system 11. Further, it is set via a terminal connected to the power conditioner 12, or the like, or set in a wired or wireless manner via a communication part, not shown, in accordance with an actual power generation status at the time of maintenance of the photovoltaic system 11. For example, the reference voltage value is set as a rated voltage (such as 250 V) with which conversion is efficient in the power conditioner 12, or as a voltage value proportional to the number of series of the solar battery modules 22. For example, since eight solar battery modules 22 are connected in series in the example of Fig. 1, when a (nominal maximum operation) voltage value of one solar battery module 22 is 25V, 200 V is set as the reference voltage value.

Control by the control part 54 to hold the voltage of the power, inputted into the DC/AC converter 51, constant is periodically performed in each predetermined period, for example.

Fig. 8 is a flowchart illustrating a process of the control part 54 for holding a voltage, accepted by the power conditioner 12, constant.

For example, when the voltage value of the power generated by the solar battery string 13 in accordance with irradiation with sunlight becomes not smaller than a predetermined voltage value with which the power conditioner 12 can convert the power to an alternating-current one, the process is started, and in Step S31, the control part 54 acquires a voltage value detected by the voltage detecting part 52.

After the process of Step S31, the process goes to Step S32, and the control part 54 determines whether or not the voltage value acquired from the voltage detecting part 52 in Step S31 is less than a range of the reference voltage value (range of several percent of the reference voltage value with the reference voltage value at the center).

In Step S32, when it is determined that the voltage value acquired from the voltage detecting part 52 is less than the range of the reference voltage value, the process goes to Step S33. In Step S33, the control part 54 controls the current adjusting part 53, and reduces the current that is inputted into the DC/AC converter 51, and the process goes to Step S36. It is to be noted that, when the current value that passes through the current adjusting part 53 is set to a minimum value, such as at the time of starting the process, the process of Step S33 is skipped and the process goes to Step S36.

On the other hand, when it is determined in Step S32 that the voltage value acquired from the voltage detecting part 52 is not less than the range of the reference voltage value (namely, not smaller than a lower limit of the range of the reference voltage value), the process goes to Step S34.

In Step S34, the control part 54 determines whether or not the voltage value acquired from the voltage detecting part 52 in Step S31 is not less than the range of the reference voltage value.

In Step S34, when it is determined that the voltage value acquired from the voltage detecting part 52 is not less than the range of the reference voltage value (namely not smaller than an upper limit of the range of the reference voltage value), the process goes to Step S35. In Step S35, the control part 54 controls the current adjusting part 53, and increases the current that is inputted into the DC/AC converter 51, and the process goes to Step S36.

On the other hand, when it is determined in Step S34 that the voltage value acquired from the voltage detecting part 52 is not more than the range of the reference voltage value, the process goes to Step S36. That is, in this case, with the process in Step S32 included, the voltage value acquired from the voltage detecting part 52 is within the range of the reference voltage value.

In Step S36, after the control part 54 holds the process just for a predetermined period, the process returns to Step S31, and thereafter, the same process is repeated. It is to be noted that, for example, when an amount of irradiation of the solar battery module 22 with sunlight decreases and becomes not higher than an amount of power convertible by the power conditioner 12, the process is completed.

As thus described, the control part 54 performs control such that the voltage of the power that is inputted into the DC/AC converter 51 is held within the range of the reference voltage value, and a voltage that is accepted by the power conditioner 12 is held within a given range.

Herewith, voltages of power outputted from the output converters 21-1 to 21-8 which are connected in series converge with the reference voltage of the power conditioner 12 as the reference, thus stabilizing the power generation in the photovoltaic system 11 as a whole. As thus described, since power in maximum amount is stably outputted from each of the output converters 21-1 to 21-8, it is possible to increase the amount of power generation in the photovoltaic system 11 as a whole.

It is to be noted that a schedule for setting a reference voltage value associated with a time and a date has previously been set in the control part 54, and in accordance with the schedule, the control part 54 can perform control such that power that is inputted into the DC/AC converter 51 is held at the reference voltage value. That is, for example, respective appropriate reference voltage values are used in morning hours, daytime hours and the like during the day, or respective appropriate reference voltages are used in accordance with seasons, thereby allowing a further increase in the amount of power generation.

Incidentally, when such control is performed as to accept power at the reference voltage value in the power conditioner 12, it is assumed that a voltage is converted at a high conversion rate in the output converter 21. In that case, as a result of a decrease in the duty value, power conversion efficiency may deteriorate, depending on the output converter 21. In this case, for example, in order to improve the amount of power generation in the photovoltaic system 11 as a whole, such management as to perform a high-output operation also in the output converter 21 can also be performed in the power conditioner 12, thereby to avoid a decrease in the amount of power generation.

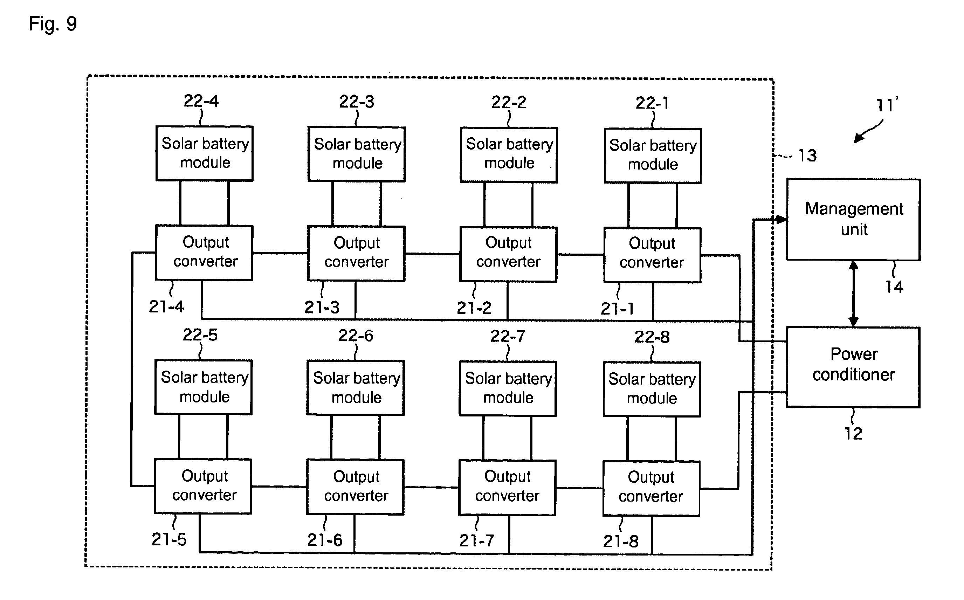

Fig. 9 is a block diagram showing an example of a configuration of another embodiment of the photovoltaic system, to which the present invention has been applied.

In Fig. 9, the photovoltaic system 11' is configured to include the power conditioner 12, the solar battery string 13, and a management unit 14. It should be noted that the photovoltaic system 11' is configured in a similar manner to the photovoltaic system 11 of Fig. 1 in being configured by connection of the power conditioner 12 with the solar battery string 13, and detailed descriptions thereof will be omitted. On the other hand, the photovoltaic system 11' is different from the photovoltaic system 11 of Fig. 1 by including the management unit 14.

The management unit 14 communicates with the output converters 21-1 to 21-8 of the solar battery string 13, and in consideration of the state of each thereof, the management unit 14 designates to switch the process to either the process for performing the maximum power point tracking control or the process for fixing the conversion efficiency.

For example, the management unit 14 is connected with the respective control parts 35 (Fig. 2) of the output converters 21-1 to 21-8 via a signal line, and the control part 35 supplies the management unit 14 with a signal showing a current amount of output power from the DC/DC converting part 31. It is to be noted that other than that the communication between the management unit 14 and the control part 35 is performed via the signal line, for example, the communication may be performed via a power line to supply power to the power conditioner 12, or the communication may be performed wirelessly.

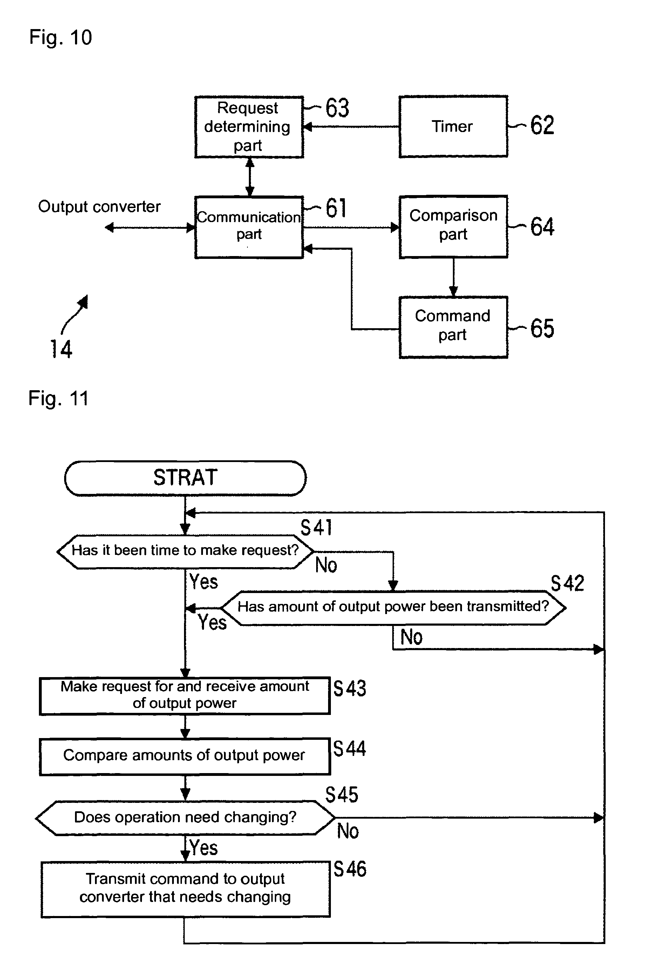

An example of a configuration of the management unit 14 will be described with reference to Fig. 10.

In Fig. 10, the management unit 14 is configured to include a communication part 61, a timer 62, a request determining part 63, a comparison part 64, and a command part 65.

The communication part 61 communicates with the respective control parts 35 of the output converters 21-1 to 21-8. The communication part 61 acquires amounts of output power of the respective DC/DC converting parts 31 of the output converters 21-1 to 21-8 by communication with the control part 35, and supplies them to the comparison part 64. That is, the communication part 61 is operation status acquiring means for acquiring an amount of output power representing one of operation statuses of the DC/DC converting part 31 included in the output converter.

The timer 62 performs timekeeping, and when it is time to make a request for the amount of output power, the timer 62 notifies the request determining part 63 that it has been such time. For example, in the photovoltaic system 11', the time for acquiring the amount of output power from the output converters 21-1 to 21-8 has been set to every ten seconds, every one minute or the like.

The request determining part 63 determines whether or not to make a request to the output converters 21-1 to 21-8 for the amount of output power, and when making a request for the amount of output power, the request determining part 63 transmits to the communication part 61 a notification of making a request for the amount of output power. For example, when notified by the timer 62 that it has been time to make a request for the amount of output power, the request determining part 63 determines to make a request of the output converters 21-1 to 21-8 for the amount of output power. Further, when the amount of output power is transmitted from any of the output converters 21, the request determining part 63 determines to make a request to the output converters 21 other than the output converter 21 having transmitted the amount of output power for the amount of output power.

The amounts of output power of all of the output converters 21 which are received by the communication part 61 are supplied to the comparison part 64, and the comparison part 64 compares those amounts of output power, and when the output converter 21 whose amount of output power is maximum is not the same output converter 21 in the previous process, the comparison part 64 notifies the command part 65 of an identification number (identification number transmitted along with the amount of output power) of the output converter 21 whose amount of output power has newly become maximum. That is, the comparison part 64 is deciding means for deciding the output converter 21 whose amount of output power has newly become maximum as one to fix the conversion rate of the voltage.

Next, in accordance with the notification from the comparison part 64, the command part 65 transmits a command for changing an operation so as to fix the conversion rate to the output converter 21 whose amount of output power has newly become maximum, and also transmits a command for changing an operation so as to perform the maximum power point tracking control to the output converter 21 whose amount of output power was maximum in the previous process.

Fig. 11 is a flowchart illustrating a process for designating a change in operation to the output converters 21-1 to 21-8 by the management unit 14.

In Step S41, in accordance with the notification from the timer 62, the request determining part 63 determines whether or not it has been time to make a request for the amount of output power.

When it is determined in Step S41 that it has not been time to make a request for the amount of output power, the process goes to Step S42, and the request determining part 63 determines whether or not the amount of output power has been transmitted from any of the output converters 21.

When the request determining part 63 determines that the amount of output power has not been transmitted in Step S42, the process returns to Step S41, and thereafter, the same process is repeated. On the other hand, when the request determining part 63 determines that it has been time to make a request for the amount of output power in Step S41 or when the request determining part 63 determines that the amount of output power has been transmitted in Step S42, the process goes to Step S43. Herein, other than that the amount of output power is transmitted from the output converter 21 in response to a request from the management unit 14 (after-mentioned Step S43), for example, the amount of output power is transmitted by determination of the output converter 21 itself when it is sensed that the power that is inputted into the DC/DC converting part 31 has abruptly changed. That is, it is determined in Step S42 that the amount of output power has been transmitted when the output converter 21 transmits the amount of output power in accordance with the abrupt change in power.

In Step S43, the request determining part 63 transmits to the output converter 21 a notification to make a request for the amount of output power via the communication part 61. It is to be noted that, when it is determined in Step S41 that the it has been time to make a request for the amount of output power, a notification to make a request for the amount of output power is transmitted to all of the output converters 21, and when it is determined in Step S42 that the amount of output power has been transmitted, a notification to make a request for the amount of output power is transmitted to the output converters 21 other than the output converter 21 having transmitted the amount of output power. In accordance with that notification, the communication part 61 receives information indicating the amount of output power transmitted from the output converter 21 and supplies it to the comparison part 64, and the process goes to Step S44.

In Step S44, the comparison part 64 compares the amounts of output power supplied in Step S43, and in Step S45, the comparison part 64 determines whether or not the operation of the output converter 21 needs changing. For example, when the output converter 21 whose amount of output power is maximum has been changed since the last process, the comparison part 64 determines that the operation of the output converter 21 needs changing.

When it is determined in Step S45 that the operation of the output converter 21 needs changing, the process goes to Step S46, and the comparison part 64 notifies the command part 65 of an identification number of the output converter 21 whose amount of output power has newly become maximum.

Accordingly, the command part 65 transmits a command for changing an operation so as to fix the conversion rate to the output converter 21 identified by means of the identification number, namely the output converter 21 whose amount of output power has newly become maximum, via the communication part 61. Further, the command part 65 transmits a command for changing an operation so as to operate the maximum power point tracking control to the output converter 21 whose amount of output power was maximum in the previous process, namely the output converter 21 having fixed the conversion rate.

After the process of Step S46, or when it is determined in Step S45 that the operation of the output converter 21 does not need changing, the process returns to Step S41, and thereafter, the same process is repeated.

As thus described, the amount of processing as a whole can be reduced more by comparing the amount of output power of each of the DC/DC converting parts 31 of the output converters 21-1 to 21-8 and transmitting the command for switching the process in the management unit 14 than by performing the process for comparing the amount of output power in each of the output converters 21-1 to 21-8. It is thereby possible to stably operate switching between the process for performing the maximum power point tracking control and the process for fixing the conversion efficiency, so as to increase the amount of power generation.

In addition, other than fixing the conversion rate only in the output converter 21 where the amount of output power of the DC/DC converting part 31 is maximum, the management unit 14 may fix conversion rates of a high-level group of output converters 21 each of whose DC/DC converting parts 31 have a large amount of output power.

Further, based on the conversion efficiency in accordance with the duty value as described above and the conversion efficiency in the power conditioner 12, the management unit 14 may decide such a reference voltage value with which an output becomes high in the photovoltaic system 11' as a whole, and set the value in the power conditioner 12.

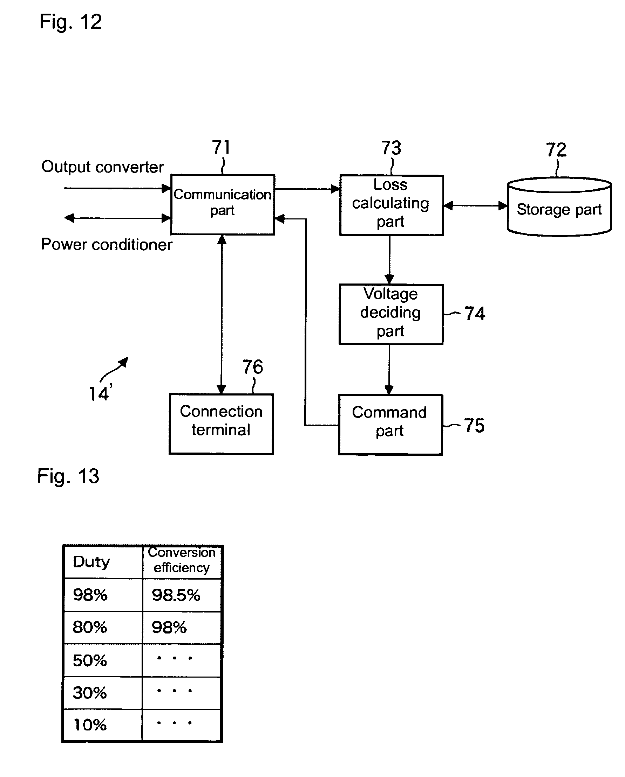

With reference to Fig. 12, another constitutional example of the management unit will be described.

In Fig. 12, a management unit 14' is configured to include a communication part 71, a storage part 72, a loss calculating part 73, a voltage deciding part 74, a command part 75, and a connection terminal 76.

The communication part 71 communicates with the respective control parts 35 of the output converters 21-1 to 21-8 and the control part 54 (Fig. 7) of the power conditioner 12. The communication part 71 acquires duty values of the respective DC/DC converting parts 31 of the output converters 21-1 to 21-8 by communication with the respective control parts 35 of the output converters 21-1 to 21-8. Further, the communication part 71 acquires a current reference voltage value of the power conditioner 12 by communication with the control part 54. The communication part 71 then supplies the duty values and the reference voltage value to the loss calculating part 73.

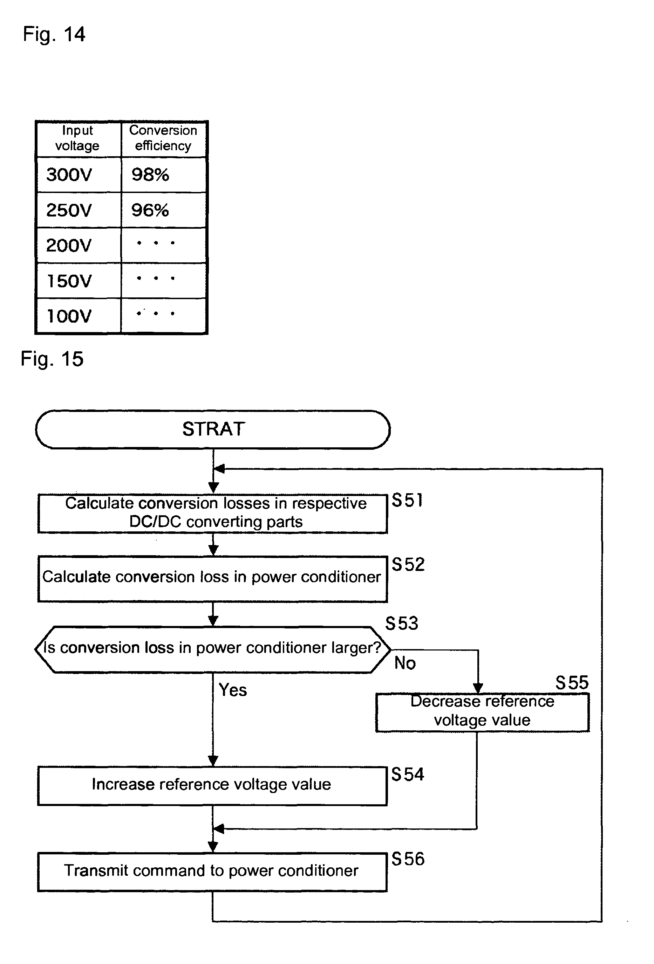

The storage part 72 stores a variety of tables required for management of the photovoltaic system 11'. For example, in the storage part 72, there are stored a table associating the duty value of the DC/DC converting part 31 with the conversion efficiency as shown in Fig. 13, a table associating the voltage value of the input voltage of the power conditioner 12 with the conversion efficiency as shown in Fig. 14, and the like.

Based on the duty values of the respective DC/DC converting parts 31 of the output converters 21-1 to 21-8 which are supplied from the communication part 71, the loss calculating part 73 refers to the table (Fig. 13) stored in the storage part 72, to calculate a conversion loss with respect to each of the DC/DC converting parts 31. Further, based on the current reference voltage value of the power conditioner 12 which is supplied from the communication part 71, the loss calculating part 73 refers to the table (Fig. 14) stored in the storage part 72, to calculate a conversion loss in the DC/AC converter 51 of the power conditioner 12. As thus described, the loss calculating part 73 is conversion loss acquiring means for calculating and acquiring conversion losses in the DC/DC converting part 31 and the DC/AC converter 51.

The voltage deciding part 74 is voltage deciding means for deciding a reference voltage value, with which an output becomes high in the photovoltaic system 11' as a whole, based on conversion losses in the respective DC/DC converting parts 31 of the output converters 21-1 to 21-8 and conversion loss in the power conditioner 12. For example, when the conversion loss in the power conditioner 12 is larger than a total of the conversion losses in the respective DC/DC converting parts 31 of the output converters 21-1 to 21-8, the voltage deciding part 74 changes the reference voltage value of the power conditioner 12 to a conversion-efficient voltage value (a larger value than the current reference voltage value). Then, the voltage deciding part 74 repeats the process for changing the voltage value based on a conversion loss after the change, thereby to make the reference voltage value converge and decide an optimum reference voltage value.

Herein, basically, the reference voltage value is uniquely decided in the power conditioner 12, and for example when about 300 V is the most conversion-efficient voltage value, the voltage deciding part 74 first gets the reference voltage value closer to 300 V, to reduce the conversion loss in the power conditioner 12. The voltage deciding part 74 then searches and decides a conversion-efficient reference voltage value as a whole, while fluctuating the reference voltage value such that the conversion losses in the respective DC/DC converting parts 31 of the output converters 21-1 to 21-8 are reduced. There is ideally obtained such a reference voltage value as to make a sum of the conversion loss in the power conditioner 12 and the conversion losses in the respective DC/DC converting parts 31 of the output converters 21-1 to 21-8 minimum.

The command part 75 (command means) outputs a command to the control part 54 of the power conditioner 12 via the communication part 71 so as to set the voltage value decided in the voltage deciding part 74 as the reference value of the power conditioner 12. It is to be noted that in the case of storing the reference voltage value set in the power conditioner 12 in the command part 75, the communication part 71 may not acquire the current reference voltage value of the power conditioner 12 by communication with the control part 54, but may acquire the reference voltage value stored in the command part 75.

The connection terminal 76 is, for example, connected with a terminal for maintenance (not shown) or the like, and that terminal communicates with the management unit 14' via the communication part 71. For example, by operating that terminal, the user can make the reference voltage value of the power conditioner 12 displayed in a display part of the terminal, and update the table stored in the storage part 72.

Next, Fig. 15 is a flowchart illustrating a process for the management unit 14' setting a reference voltage value in the power conditioner 12.

For example, when conversion of power is started in the power conditioner 12, the process is started, and in Step S51, the communication part 71 communicates with the respective control parts 35 of the output converters 21-1 to 21-8. Then, the communication part 71 acquires duty values of the respective DC/DC converting parts 31 of the output converters 21-1 to 21-8, and supplies those duty values to the loss calculating part 73. The loss calculating part 73 calculates conversion losses in the respective DC/DC converting parts 31 of the output converters 21-1 to 21-8 with reference to the table (Fig. 13) stored in the storage part 72, to notify them to the voltage deciding part 74.

In Step S52, the communication part 71 communicates with the control part 54 of the power conditioner 12, acquires the current reference voltage value of the power conditioner 12, and supplies that reference voltage value to the loss calculating part 73. The loss calculating part 73 calculates a conversion loss in the DC/AC converter 51 of the power conditioner 12 based on the current reference voltage value with reference to the table (Fig. 14) stored in the storage part 72, to notify it to the deciding part 74.

In Step S53, the voltage deciding part 74 determines whether or not the conversion loss in the DC/AC converter 51 of the power conditioner 12 which was calculated in Step S52 is larger than the conversion losses in the respective DC/DC converting parts 31 of the output converters 21-1 to 21-8 which were calculated in Step S51.

When it is determined in Step S53 that the conversion loss in the DC/AC converter 51 of the power conditioner 12 is larger, the process goes to Step S54, and the voltage deciding part 74 decides a reference voltage value, with which an output becomes high in the photovoltaic system 11' as a whole. That is, in this case, since the conversion loss in the DC/AC converter 51 of the power conditioner 12 is larger, such a voltage value is decided as to increase the reference voltage value of the power conditioner 12 so that the conversion efficiency in the DC/AC converter 51 improves.

On the other hand, when it is determined in Step S53 that the conversion loss in the DC/AC converter 51 of the power conditioner 12 is not larger (the conversion loss in the DC/AC converter 51 of the power conditioner 12 is not larger than the conversion losses in the respective DC/DC converting parts 31 of the output converters 21-1 to 21-8), the process goes to Step S55.

In Step S55, the voltage deciding part 74 decides a reference voltage value with which an output becomes high in the photovoltaic system 11' as a whole. That is, in this case, since the conversion loss in the DC/AC converter 51 of the power conditioner 12 is not larger, such a voltage value is decided as to decrease the reference voltage value of the power conditioner 12 so that the conversion efficiency in the respective DC/DC converting parts 31 of the output converters 21-1 to 21-8 improves.

After the process of Step S54 or S55, the process goes to Step S56, and the voltage deciding part 74 notifies the command part 75 of the reference voltage value decided in Step S54 or S55. Then, the command part 75 transmits a command for updating of reference voltage value of the power conditioner 12, to the control part 54 of the power conditioner 12 via the communication part 71, and the process returns to Step S51, whereafter, the same process is repeated.

As thus described, the management unit 14' sets the reference voltage value of the power conditioner 12 in consideration of the duty value of the DC/DC converting part 31 of the output converter 21, thereby allowing conversion of power with optimum conversion efficiency in a well-balanced manner in the photovoltaic system 11' as a whole. It is thus possible to operate the photovoltaic system 11' with a higher output.

It should be noted that, although the management unit 14' has an independent configuration in the present embodiment, the control part 54 of the power conditioner 12 may include a function of the management unit 14'. That is, the power conditioner 12 may include the communication part 71, the storage part 72, the loss calculating part 73, the voltage deciding part 74, the command part 75, and the connection terminal 76 of the management unit 14'. Further, the control part 35 of any of the output converters 21-1 to 21-8 may include the function of the management unit 14'.

In addition, although the example was described where the conversion losses in the output converters 21-1 to 21-8 are calculated in the management unit 14' in the photovoltaic system 11', for example, individual conversion losses may be calculated in the respective control parts 35 of the output converters 21-1 to 21-8, and the conversion losses may be notified to the management unit 14'. Further, similarly, the conversion loss may be calculated in the control part 54 of the power conditioner 12, and the conversion loss may be notified to the management unit 14'.

Moreover, other than that the respective conversion losses in the output converters 21-1 to 21-8 are calculated with reference to the table based on the duty values, for example, the control part 35 may calculate a voltage value and a current value of power that is inputted into the DC/DC converting part 31 and a voltage value and a current value of power that is outputted from the DC/DC converting part 31 and may calculate output power/input power, to calculate the conversion loss. Similarly, as for the conversion loss in the power conditioner 12, input power and output power are detected by a sensor built in the power conditioner 12, to calculate the conversion loss.

Moreover, the management unit 14' can communicate with an external server via a network by the communication part 71 (communication means), to acquire time information, insolation information, temperature information and the like, for example, and store the reference voltage value of the power conditioner 12 associated with the information into the storage part 72 (storage means). Then, the management unit 14' can make reference to the storage part 72 based on the insolation information or the temperature information, to decide a more optimum reference voltage value of the power conditioner 12 through use of the reference voltage value associated with the past information close to the current insolation or temperature. Moreover, the use of that information can improve the decision accuracy and decision speed for the reference voltage.

Furthermore, the process for the management unit 14' setting the reference voltage value in the power conditioner 12 is repeated in each predetermined given period, such as every one minute, every ten minutes or every one hour. Alternatively, when the management unit 14' can acquire insolation information, temperature information or the like, by executing the process with a change in insolation or a temperature taken as a trigger, it is possible to calculate a conversion loss suitable for the insolation or the temperature at that time, and perform such control as to make the amount of power generation more optimum. For example, when the weather changes from sunny to cloudy, specifically when an insolation intensity changes by not less than 500 w/m² from one at the time of calculating the conversion loss before, the management unit 14' can execute the process. Moreover, when the temperature changes by not less than 10 degrees from one at the time of calculating the conversion loss before, the management unit 14' can execute the process.

It should be noted that each of the processes described with reference to the foregoing flowchart does not need performing in time sequence in the described order of the flowcharts, and the processes include a process that is parallelly or individually executed (e.g., parallel process or process by an object).

Further, each control part is configured to include a CPU (Central Processing Unit), a ROM (Read Only Memory), a RAM (Random Access Memory), a flash memory, (e.g., EEPROM (Electronically Erasable and Programmable Read Only Memory)), and the like, and a program stored in the ROM or the flash memory is loaded to the RAM and executed, thereby to control each part of the photovoltaic system 11. It should be noted that as for a program to be executed by the CPU, other than the programs previously stored in the ROM and the flash memory, a program can be downloaded to the flash memory and updated as appropriate. Further, a program may be one to be transferred to a remote computer and executed.

It is to be noted that the embodiment of the present invention is not restricted to the foregoing embodiments, and a variety of changes are possible in the range not deviating from the gist of the present invention.

### DESCRIPTION OF SYMBOLS

- 11: photovoltaic system
- 12: power conditioner
- 13: solar battery string
- 14: management unit
- 21: output converter
- 22: solar battery module
- 31: DC/DC converting part
- 32: voltage detecting part
- 33: current detecting part
- 34: power line communication part
- 35: control part

## Claims

1. A voltage converter (21), comprising:
a conversion processing unit (31) configured to execute a process to convert a voltage of power generated from sunlight;
a switching unit (47) configured to switch an operation of the conversion processing unit (31) to either conversion-rate fixing or maximum power point tracking control at least based on an operation status of the conversion processing unit (31);
an operation status acquiring unit (41) configured to communicate with another voltage converter (21) to acquire an operation status of conversion processing unit (31) included in the another voltage converter (21); and
a comparison unit (46) configured to compare an amount of output power of the conversion processing unit (31) which is the operation status acquired by the operation status acquiring unit (41) with an amount of output power which is the operation status of the conversion processing unit (31) to decide whether or not to fix a conversion rate of the voltage in the conversion processing unit (31),
wherein the comparison unit (46) determines to fix the conversion rate of the voltage in the conversion processing unit (31) when the amount of the output power which is the operation status of the conversion processing unit (31) is maximum and perform maximum power point tracking control in the conversion processing unit (31) when the amount of the output power which is the operation status of the conversion processing unit (31) is not maximum, and
notifying the switching unit (47) of the determination.

2. A photovoltaic system (11) comprising a plurality of battery solar modules (22) and a plurality of voltage converters (21) according to claim 1, wherein a voltage converter (21) is provided with respect to each solar battery module (22).

3. A voltage converting method, comprising the steps of:
executing a conversion process for executing a process to convert a voltage of power generated from sunlight; wherein the method further comprises the steps of:
acquiring an operation status of another conversion process;
switching an operation of the conversion process to either conversion-rate fixing or maximum power point tracking control at least based on an operation status of the conversion process; and
comparing an amount of output power of a conversion processing unit (31) which is the operation status of the other conversion process to decide to switch an operation of the conversion process to either conversion-rate fixing or maximum power point tracking control,
wherein the conversion process is switched to conversion-rate fixing when the amount of the output power which is the operation status of the conversion processing unit (31) is maximum and maximum power point tracking control when the amount of the output power which is the operation status of the conversion processing unit (31) is not maximum.

4. A management device (14), comprising:
an operation status acquiring unit (61) configured to communicate with a plurality of voltage converters (21) each having a conversion processing unit (31) configured to execute a process to convert a voltage of power generated from sunlight and a switching unit (65) configured to switch an operation of the conversion processing unit (31) to either conversion-rate fixing or maximum power point tracking control at least based on an operation status of the conversion processing unit (31), to acquire operation statuses of the conversion processing unit (31) included in all of the voltage converters (21); and
a deciding unit (64) configured to compare amounts of output power of the conversion processing unit (31) which are the operation statuses acquired by the operation status acquiring unit (61), to decide the conversion processing unit (31) to switch to either conversion-rate fixing or maximum power point tracking control,
wherein the deciding unit (64) determines to fix the conversion rate of the voltage in the conversion processing unit (31) when the amount of the output power which is the operation status of the conversion processing unit (31) is maximum and switch an operation of the conversion processing unit (31) to maximum power point tracking control in the conversion processing unit (31) when the amount of the output power which is the operation status of the conversion processing unit (31) is not maximum.

## Patentansprüche

1. Ein Spannungswandler (21), welcher aufweist:
eine Umwandlungsverarbeitungseinheit (31), welche dazu eingerichtet ist, einen Prozess zum Umwandeln einer Spannung einer Energie, die aus Sonnenlicht erzeugt wurde, auszuführen;
eine Schalteinheit (47), welche dazu eingerichtet ist, einen Betrieb der Umwandlungsverarbeitungseinheit (31) zumindest basierend auf einem Betriebsstatus der Umwandlungsverarbeitungseinheit (31) zu entweder einer Fixierung der Umwandlungsrate oder einer Regelung mit Nachverfolgen des Punkts der maximalen Leistung zu schalten;
eine Betriebszustandserfassungseinheit (41), welche dazu eingerichtet ist, mit einem anderen Spannungswandler (21) zu kommunizieren, um einen Betriebszustand einer Umwandlungsverarbeitungseinheit (31) zu erfassen, welche in dem anderen Spannungswandler (21) enthalten ist; und
einer Vergleichseinheit (46), welche dazu eingerichtet ist, eine Menge an Ausgangsenergie der Umwandlungsverarbeitungseinheit (31), welche der Betriebszustand ist, der durch die Betriebszustandserfassungseinheit (41) erfasst wird, mit einer Menge an Ausgangsenergie, welche der Betriebszustand der Umwandlungsverarbeitungseinheit (31) ist, zu vergleichen, um zu entscheiden, ob eine Umwandlungsrate der Spannung in der Umwandlungsverarbeitungseinheit (31) fixiert werden soll oder nicht,
wobei die Vergleichseinheit (46) bestimmt, die Umwandlungsrate der Spannung in der Umwandlungsverarbeitungseinheit (31) zu fixieren, wenn die Menge der Ausgangsenergie, welche der Betriebszustand der Umwandlungsverarbeitungseinheit (31) ist, maximal ist, und eine Regelung mit Nachverfolgen des Punkts der maximalen Leistung in der Umwandlungsverarbeitungseinheit (31) durchführt, wenn die Menge der Ausgangsenergie, welche der Betriebszustand der Umwandlungsverarbeitungseinheit (31) ist, nicht maximal ist, und
benachrichtigen der Schalteinheit (42) über die Bestimmung.

2. Ein Photovoltaiksystem (11), welches eine Mehrzahl von Solarbatteriemodulen (22) und eine Mehrzahl von Spannungswandlern (21) nach Anspruch 1 aufweist, wobei ein Spannungswandler (21) in Bezug auf jedes Solarbatteriemodul (22) vorgesehen ist.

3. Ein Spannungsumwandlungsverfahren, welches die Schritte aufweist:
Ausführen eines Umwandlungsprozesses zum Ausführen eines Prozesses, um eine Spannung einer Energie, die aus Sonnenlicht erzeugt wurde, umzuwandeln, wobei das Verfahren des Weiteren die Schritte aufweist:
Erfassen eines Betriebszustands eines anderen Umwandlungsprozesses;
Schalten eines Betriebs des Umwandlungsprozesses zu entweder einer Fixierung der Umwandlungsrate oder einer Regelung mit Nachverfolgen des Punkts der maximalen Leistung zumindest basierend auf einem Betriebszustand des Umwandlungsprozesses,
Vergleichen einer Menge an Ausgangsenergie einer Umwandlungsverarbeitungseinheit (31), welche der Betriebszustand des anderen Umwandlungsprozesses ist, um zu entscheiden, ob ein Betrieb des Umwandlungsprozesses zu entweder einer Fixierung der Umwandlungsrate oder einer Regelung mit Nachverfolgen des Punkts der maximalen Leistung geschaltet werden soll,
wobei der Umwandlungsprozess zu einer Fixierung der Umwandlungsrate, wenn die Menge der Ausgangsenergie, welche der Betriebszustand der Umwandlungsverarbeitungseinheit (31) ist, maximal ist, und zu einer Regelung mit Nachverfolgen des Punkts der maximalen Leistung geschaltet wird, wenn die Menge der Ausgangsenergie, welche der Betriebszustand der Umwandlungsverarbeitungseinheit (31) ist, nicht maximal ist.

4. Eine Verwaltungsvorrichtung (14), welche aufweist:
eine Betriebszustandserfassungseinheit (61), welche dazu eingerichtet ist, mit einer Mehrzahl von Spannungswandlern (21), welche jeweils eine Umwandlungsverarbeitungseinheit (31) aufweisen, welche dazu eingerichtet ist, einen Prozess zum Umwandeln einer Spannung einer Energie, die aus Sonnenlicht erzeugt wurde, auszuführen, und einer Schalteinheit (65) zu kommunizieren, welche dazu eingerichtet ist, einen Betrieb der Umwandlungsverarbeitungseinheit (31) zumindest basierend auf einem Betriebsstatus der Umwandlungsverarbeitungseinheit (31) zu entweder einer Fixierung der Umwandlungsrate oder einer Regelung mit Nachverfolgen des Punkts der maximalen Leistung zu schalten, um Betriebszustände der Umwandlungsverarbeitungseinheit (31) zu erfassen, die in allen der Spannungswandler (21) enthalten sind; und
eine Entscheidungseinheit (64), welche dazu eingerichtet ist, Mengen an Ausgangsenergie der Umwandlungsverarbeitungseinheit (31), welche die Betriebszustände sind, die durch die Betriebszustandserfassungseinheit (61) erfasst werden, zu vergleichen, um zu entscheiden, ob die Umwandlungsverarbeitungseinheit (31) zu entweder einer Fixierung der Umwandlungsrate oder einer Regelung mit Nachverfolgen des Punkts der maximalen Leistung geschaltet werden soll,
wobei die Entscheidungseinheit (64) bestimmt, die Umwandlungsrate der Spannung in der Umwandlungsverarbeitungseinheit (31) zu fixieren, wenn die Menge der Ausgangsenergie, welche der Betriebszustand der Umwandlungsverarbeitungseinheit (31) ist, maximal ist, und einen Betrieb der Umwandlungsverarbeitungseinheit (31) zu einer Regelung mit Nachverfolgen des Punkts der maximalen Leistung in der Umwandlungsverarbeitungseinheit (31) schaltet, wenn die Menge der Ausgangsenergie, welche der Betriebszustand der Umwandlungsverarbeitungseinheit (31) ist, nicht maximal ist.

## Revendications

1. Convertisseur de tension (21), comprenant :
- une unité de traitement de conversion (31) configurée pour exécuter un traitement pour convertir une tension de puissance générée par la lumière du soleil ;
- une unité de commutation (47) configurée pour commuter un fonctionnement de l'unité de traitement de conversion (31) soit en un fonctionnement avec un rapport de conversion fixe, soit en une commande de suivi de point de puissance maximale au moins sur la base d'un état de fonctionnement de l'unité de traitement de conversion (31) ;
- une unité d'acquisition d'état de fonctionnement (41) configurée pour communiquer avec un autre convertisseur de tension (21) pour acquérir un état de fonctionnement de l'unité de traitement de conversion (31) comprise dans l'autre convertisseur de tension (21) ; et
- une unité de comparaison (46) configurée pour comparer une quantité de puissance de sortie de l'unité de traitement de conversion (31) qui est l'état de fonctionnement acquis par l'unité d'acquisition d'état de fonctionnement (41) avec une quantité de puissance de sortie qui est l'état de fonctionnement de l'unité de traitement de conversion (31) pour décider de fixer ou non un rapport de conversion de la tension dans l'unité de traitement de conversion (31),
dans lequel l'unité de comparaison (46) détermine la fixation du rapport de conversion de la tension dans l'unité de traitement de conversion (31) lorsque la quantité de la puissance de sortie qui est l'état de fonctionnement de l'unité de traitement de conversion (31) est maximale et réalise une commande de suivi de point de puissance maximale dans l'unité de traitement de conversion (31) lorsque la quantité de la puissance de sortie qui est l'état de fonctionnement de l'unité de traitement de conversion (31) n'est pas maximale, et
- la notification de l'unité de commutation (47) de la détermination.

2. Système photovoltaïque (11) comprenant une pluralité de modules de batterie solaire (22) et une pluralité de convertisseurs de tension (21) selon la revendication 1, dans lequel un convertisseur de tension (21) est fourni concernant chaque module de batterie solaire (22).

3. Procédé de conversion de tension, comprenant les étapes de :
- exécution d'un traitement de conversion pour exécuter un traitement pour convertir une tension de puissance générée par la lumière du soleil ; dans lequel le procédé comprend en outre les étapes de :
- acquisition d'un état de fonctionnement d'un autre traitement de conversion ;
- commutation d'un fonctionnement du traitement de conversion soit en un fonctionnement avec un rapport de conversion fixe, soit en une commande de suivi de point de puissance maximale au moins sur la base d'un état de fonctionnement du traitement de conversion ; et
- comparaison d'une quantité de puissance de sortie d'une unité de traitement de conversion (31) qui est l'état de fonctionnement de l'autre traitement de conversion pour décider de commuter un fonctionnement du traitement de conversion soit en un fonctionnement avec un rapport de conversion fixe, soit en une commande de suivi de point de puissance maximale,
dans lequel le traitement de conversion est commuté en un fonctionnement avec un rapport de conversion fixe lorsque la quantité de la puissance de sortie qui est l'état de fonctionnement de l'unité de traitement de conversion (31) est maximale et en une commande de suivi de point de puissance maximale lorsque la quantité de la puissance de sortie qui est l'état de fonctionnement de l'unité de traitement de conversion (31) n'est pas maximale.

4. Dispositif de gestion (14), comprenant :
- une unité d'acquisition d'état de fonctionnement (61) configurée pour communiquer avec une pluralité de convertisseurs de tension (21) ayant chacun une unité de conversion (31) configurée pour exécuter un traitement pour convertir une tension de puissance générée par la lumière du soleil et une unité de commutation (65) configurée pour commuter une unité de traitement de conversion (31) soit en un fonctionnement avec un rapport de conversion fixe, soit en une commande de suivi de point de puissance maximale au moins sur la base d'un état de fonctionnement de l'unité de traitement de conversion (31), pour acquérir des états de fonctionnement de l'unité de traitement de conversion (31) comprise dans tous les convertisseurs de tension (21) ; et
une unité de décision (64) configurée pour comparer des quantités de puissance de sortie de l'unité de traitement de conversion (31) qui sont les états de fonctionnement acquis par l'unité d'acquisition des états de fonctionnement (61), pour décider de la commutation de l'unité de traitement le conversion (31) soit en un fonctionnement avec un rapport de conversion fixe, soit en une commande de suivi de point de puissance maximale,
dans lequel l'unité de décision (64) détermine la fixation du rapport de conversion de la tension de l'unité de traitement (31) lorsque la quantité de la puissance de sortie qui est l'état de fonctionnement de l'unité de traitement de conversion (31) en une commande de suivi de point de puissance maximale dans l'unité de traitement de conversion (31) lorsque la quantité de la puissance de sortie qui est l'état de fonctionnement de l'unité de traitement de conversion (31) n'est pas maximale.
